(19) Europäisches Patentamt
European Patent Office
Office européen des brevets

(11) **EP 1 907 260 B1**

(12) **FASCICULE DE BREVET EUROPEEN**

(45) Date de publication et mention
de la délivrance du brevet:
**24.03.2010 Bulletin 2010/12**

(51) Int Cl.:
***B62D 6/00*** (2006.01)

(21) Numéro de dépôt: 06778937.0

(86) Numéro de dépôt international:
**PCT/FR2006/050559**

(22) Date de dépôt: **14.06.2006**

(87) Numéro de publication internationale:
**WO 2007/012770 (01.02.2007 Gazette 2007/05)**

(54) **PROCEDE DE CONTROLE DE L'ORIENTATION DIRECTIONNELLE D'UN VEHICULE**

VERFAHREN ZUR STEUERUNG DER LENKAUSRICHTUNG EINES FAHRZEUGS

METHOD FOR CONTROLLING THE STEERING ORIENTATION OF A VEHICLE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **25.07.2005 FR 0507891**

(43) Date de publication de la demande:
**09.04.2008 Bulletin 2008/15**

(73) Titulaire: **RENAULT S.A.S.
92100 Boulogne Billancourt (FR)**

(72) Inventeur: **POTHIN, Richard
F-78760 Jouars Pontchartrain (FR)**

(56) Documents cités:
**EP-A- 1 147 960      EP-A- 1 407 949**

## EP 1 907 260 B1

**Description**

La présente invention concerne, de façon générale, le domaine de l'orientation de roues directionnelles d'un même train de direction d'un véhicule dont les roues sont orientables indépendamment l'une de l'autre.

Plus particulièrement, l'invention concerne procédé de contrôle de l'orientation directionnelle d'un véhicule piloté comportant au moins deux roues directionnelles dont chacune est orientable indépendamment de l'autre selon un angle d'orientation propre, ces roues appartenant à un train du véhicule, ce procédé comprenant une étape de collecte d'une consigne d'accélération latérale, et une étape de calcul de consignes d'orientation de chaque roue directionnelle en fonction de ladite consigne d'accélération latérale.

Afin d'améliorer le comportement d'un véhicule équipé d'un train de direction possédant au moins deux roues chacune orientable indépendamment de l'autre, et par conséquent afin d'augmenter la sécurité des passagers du véhicule, des fabricants de véhicule ont développé des stratégies d'orientation de ces roues.

Un procédé de contrôle du type précédemment défini, permettant une telle orientation des roues directionnelles de ce véhicule, est par exemple décrit dans le document brevet EP1147960.

Ce document décrit l'utilisation d'une mesure des efforts latéraux exercés par le sol sur chaque roue du véhicule afin le contrôler la trajectoire du véhicule. Pour cela il est proposé d'agir sur les suspensions avant et arrière du véhicule en fonction des mesures.

Le document EP 1407949 décrit un procédé de contrôle de l'orientation directionnelle d'un véhicule, dans lequel les consignes d'orientation des roues directionnelles sont déterminées en prenant en compte les niveaux d'adhérence de ces roues par rapport au sol.

Dans ce contexte, la présente invention a pour but de proposer un procédé de contrôle de l'orientation directionnelle permettant une solution alternative pour la répartition dynamique des efforts sur les roues du véhicule en fonction de la consigne donnée par le pilote du véhicule.

A cette fin, le procédé de l'invention, par ailleurs conforme à la définition générique qu'en donne le préambule défini précédemment, est essentiellement **caractérisé en ce que** durant l'opération de calcul des consignes d'orientation des roues directionnelles, on calcule des consignes d'orientation de chacune des roues dudit train de sorte que la différence entre les niveaux d'adhérence $\mu$ de ces roues par rapport au sol soit inférieure à une valeur limite.

L'invention permet une meilleure répartition des efforts sur les roues d'un même train et donc une meilleure exploitation du potentiel d'adhérence de chacune des roues de ce train.

En effet, l'invention vise à égaliser les niveaux d'adhérence des roues d'un même train, par le contrôle de l'angle d'orientation de chacune de ces roues. L'égalisation parfaite des niveaux d'adhérences des roues d'un même train est en effet particulièrement difficile à obtenir, et c'est la raison pour laquelle est introduite une valeur limite qui correspond à une valeur limite de tolérance de différence d'adhérence entre ces roues. L'égalisation des niveaux d'adhérence est donc vraie à une valeur limite près que l'on cherche à minimiser autant que possible. La difficulté d'obtention de niveaux d'adhérence égaux entre les roues d'un même train est liée par exemple à des imperfections des modèles de calcul, au temps de réponse du système de commande des angles d'orientation des roues, aux imperfections de la chaussée.

En résumé, l'invention consiste à traduire la consigne d'accélération latérale demandée par le conducteur en des consignes d'angles de roues directionnelles telles que l'on obtienne un premier niveau d'adhérence équivalent sur les deux pneumatiques du train avant. Grâce à cette recherche d'une équivalence des niveaux d'adhérences des roue d'un même train, l'invention permet d'améliorer la stabilité et la maniabilité du véhicule tout en respectant la consigne de trajectoire donnée par le pilote/conducteur.

On peut par exemple faire en sorte que le procédé soit mis en oeuvre sur un véhicule comportant quatre roues directionnelles dont chacune est orientable indépendamment de l'autre selon un angle d'orientation propre, deux de ces roues appartiennent à un train avant du véhicule et deux autres de ces roues appartiennent à un train arrière du véhicule, le procédé étant en outre **caractérisé en ce que** durant l'opération de calcul des consignes d'orientation des roues directionnelles :

- on calcule des consignes d'orientation de chacune des roues du train avant de sorte que la différence entre les niveaux d'adhérence de ces roues par rapport au sol soit inférieure à ladite première valeur limite et ;
- on calcule des consignes d'orientation de chacune des roues du train arrière de sorte que la différence entre les niveaux d'adhérence de ces roues par rapport au sol soit inférieure à une seconde valeur limite.

Grâce à ce mode de réalisation les roues d'un même train ont un niveau d'adhérence sensiblement équivalent entre elles à des valeurs limites (première et seconde valeurs) près que l'on cherche à minimiser. Les niveaux d'adhérences de chaque train avant et arrière sont ajustés en fonction des besoins propres à chaque train du véhicule, pour cela, les niveaux d'adhérence des trains avant et arrière ne sont pas forcément équivalents entre eux.

La maniabilité de l'ensemble du véhicule est ainsi accrue car chaque train possède son propre un niveau d'adhérence équivalent.

On peut également faire en sorte que le niveau d'adhérence $\mu$ d'une roue soit calculé en appliquant la formule $\mu = \dfrac{Fy}{F_z}$ avec *Fy* représentant la force transversale appliquée sur cette roue par le sol et avec $F_z$ représentant la force verticale appliquée sur cette roue par le sol.

Selon un mode de réalisation particulier, les efforts verticaux de chaque roue peuvent être mesurés par des capteurs de charge.

On peut également faire en sorte que la force verticale appliquée sur la roue soit estimée au moins à partir de l'accélération longitudinale et transversale du véhicule, en prenant en compte la charge statique du véhicule et des reports de charge dynamiques longitudinaux et transversaux.

On peut également faire en sorte que l'une au moins des accélérations longitudinale et transversale du véhicule soit constituée ou dérivée d'un signal de mesure délivré par au moins un capteur.

Un signal d'accélération longitudinale et transversale peut provenir d'un ou plusieurs accéléromètres placés sur le véhicule ou peut par exemple provenir d'une dérivation d'un signal provenant d'un ou plusieurs capteurs de vitesse positionnés sur le véhicule.

On peut également faire en sorte que l'accélération longitudinale du véhicule soit obtenue à partir d'au moins une mesure de vitesse instantanée du véhicule.

On peut également faire en sorte que l'accélération transversale du véhicule soit estimée à partir d'une mesure de la vitesse instantanée du véhicule et d'une mesure d'un angle de rotation du volant de ce véhicule. L'utilisation de la mesure de vitesse instantanée avec l'angle de rotation du volant permet de corréler une vitesse mesurée à une information de trajectoire souhaitée par le conducteur, ce qui permet de se rapprocher de la vitesse réelle du véhicule dans le temps et ce qui permet d'en déduire les accélérations transversales et longitudinales.

On peut également faire en sorte de calculer le niveau d'adhérence $\mu_1$ d'une première roue du train avant du véhicule en utilisant la fonction $\mu_1 = F_{y11}/F_{z11} = \dfrac{M_{avant}(\gamma t + L_1 \ddot{\psi})}{F_{z11} + F_{z12}}$ où $F_{z11}$ représente la force verticale appliquée sur cette première roue du train avant ($R_{11}$) par le sol et $F_{z12}$ représente la force verticale appliquée sur la seconde roue de ce train avant ($R_{12}$) par le sol, $M_{avant}$ représente la masse totale du véhicule répartie sur ce train avant, $\gamma t$ représente l'accélération latérale du véhicule mesurée ou évaluée au centre de gravité (G) de ce véhicule, $L_1$ représente la distance entre le train avant du véhicule et le centre de gravité (G) et $\ddot{\psi}$ représente l'accélération du mouvement de lacet du véhicule.

On peut également faire en sorte de calculer le niveau d'adhérence $\mu_2$ d'une première roue du train arrière du véhicule en utilisant la fonction

$$\mu_2 = F_{y21}/F_{z21} = \frac{M_{arrière}(\gamma t - L_2 \ddot{\psi})}{F_{z21} + F_{z22}}$$

où $F_{z21}$ représente la force verticale appliquée sur cette première roue du train arrière ($R_{11}$) par le sol et $F_{z12}$ représente la force verticale appliquée sur la seconde roue de ce train arrière ($R_{22}$) par le sol, $M_{arrière}$ représente la masse totale du véhicule répartie sur ce train arrière, $\gamma t$ représente l'accélération latérale du véhicule mesurée ou évaluée au centre de gravité (G) de ce véhicule, $L_2$ représente la distance entre le train arrière du véhicule et le centre de gravité (G) et $\ddot{\psi}$ représente l'accélération du mouvement de lacet du véhicule.

L'accélération du mouvement de lacet $\ddot{\psi}$ correspond à la dérivée seconde dans le temps du mouvement de rotation du véhicule par rapport à un axe verticale passant par le centre de gravité G de ce véhicule.

On peut également faire en sorte de calculer chaque consigne d'orientation de roue directionnelle en inversant un modèle de calcul de référence le dit modèle comportant une opération consistant à calculer la force transversale appliquée sur la roue en fonction de l'orientation de cette roue et de paramètres de comportement dynamique du véhicule. Un exemple détaillé de ce modèle est donné dans la description détaillée suivante.

D'autres caractéristiques et avantages de l'invention ressortiront clairement de la description qui en est faite ci-après, à titre indicatif et nullement limitatif, en référence aux dessins annexés, dans lesquels:

la figure 1 représente un schémas de principe de l'invention avec obtention des angles de braquage de chaque roue directionnels par inversion d'un modèle de référence ;

la figure 2 représente un schéma de principe de l'invention avec obtention des angles de braquage de chaque roue directionnelle par un asservissement en effort latéral ;

la figure 3 représente un schéma de principe d'un sous bloc numéroté 5 des figures 1 et 2, ce sous bloc (appelé bloc LFD) permettant de calculer les efforts transversaux latéraux exercés sur chaque roue directionnelle.

Comme annoncé précédemment, l'invention concerne un procédé de contrôle de l'orientation directionnelle d'un véhicule automobile piloté. Ce procédé permet d'optimiser les potentiels latéraux d'un véhicule équipé d'un système de pilotage des quatre angles roues sans modifier sa trajectoire.

Cela permet par exemple d'améliorer la stabilité du véhicule dans les phases où il subit de fortes accélérations transversales et de faibles accélérations longitudinales.

L'invention concerne une stratégie de commande qui répartit les quatre efforts latéraux sur les roues directionnelles afin d'améliorer le comportement du véhicule et par conséquent la sécurité du conducteur.

Elle est particulièrement adaptée pour des systèmes qui permettent d'avoir les quatre angles de braquage aussi appelés angles directionnels de roues orientables indépendamment les uns des autres (de tels systèmes sont connus dans le domaine technique sous l'expression anglaise « steer by wire »).

L'invention est mise en oeuvre sur un véhicule comprenant au moins un dispositif de pilotage des quatre angles de roues directionnelles, un ou des capteurs permettant la mesure de la vitesse véhicule et l'estimation ou la mesure de l'accélération longitudinale, de l'angle au volant, l'estimation ou la mesure de l'accélération transversale et d'un ou des moyens électroniques de calcul.

L'invention consiste à traduire la consigne d'accélération latérale demandée par le conducteur en quatre consignes d'angles à donner aux roues directionnelles, ces consignes étant réparties de façon à toujours obtenir un premier niveau d'adhérence équivalent sur les deux pneumatiques du train avant et un deuxième niveau d'adhérence sur les deux pneumatiques du train arrière.

La stratégie uniformise les potentiels latéraux par train afin de respecter la consigne d'accélération latérale demandée par le conducteur.

Elle tient compte de la charge verticale estimée à la roue. Par conséquent en virage, le report de charge latéral conduit à augmenter l'angle de braquage à l'extérieur et à le diminuer l'intérieur.

La stabilité est ainsi améliorée dans des phases critiques comme par exemple la phase où le véhicule subit une forte accélération transversale et une faible décélération longitudinale. L'invention permet d'atténuer de la prise du roulis du véhicule et améliore le confort en virage tout en respectant la consigne d'accélération transversale (aussi appelée consigne d'accélération latérale) demandée par le conducteur.

## NOTATIONS ET ABREVIATIONS

- $M$ (kg) : Masse totale du véhicule

- $M_{avant}$ (kg) : Masse totale du train avant

- $M_{arrière}$ (kg) : Masse totale du train arrière

- $Iz$ (N.m) : Inertie du véhicule autour d'un axe vertical passant par son centre de gravité G

- h(m) : Hauteur du véhicule au centre de gravité G

- $L_1$ (m) : Distance de G à l'essieu avant

- $L_2$ (m) : Distance de G à l'essieu arrière

- $e_1$ : voie avant

- $e_2$ : voie arrière

- $L$(m) : Empattement du véhicule (distance entre les trains avant et arrière)

- $D_1$ (N/rad) : Rigidité de dérive du train avant

- *D₂* (N/rad) : Rigidité de dérive du train arrière

- *Dij* (N/rad): Rigidité de dérive des roues ij

- *H₁* (N/rad) : Rigidité de carrossage avant

- *H₂* (N/rad) : Rigidité de carrossage arrière

- *Bal* (m) : Rayon de ballant avant

- *Dem* (s.u.) : Démultiplication angle de braquage volant vers angle de braquage roues

- $\alpha_{(1,2)}$ (rad) : Angle de braquage moyen du train (avant /arrière)

- $\alpha_{ij.\,cond}$ (rad) : Angles de braquage des roues ij demandés par le conducteur (aussi noté alpha i, j)

- $\alpha_{ij}$ (rad) : Angles de braquage des roues ij demandés par la stratégie

- *V* (m/s) : Vitesse du véhicule

- $\dot{\psi}$ (rad/s): Vitesse de lacet (aussi notée vitesse_lacet_m), vitesse de rotation du véhicule autour de son centre de gravité suivant un axe vertical.

- $\ddot{\psi}$ (rad/s²): Accélération de lacet (aussi notée accel_lacet_m), accélération de rotation du véhicule autour de son centre de gravité suivant un axe vertical.

- $\gamma_t$ (m/s²): Accélération latérale (aussi notée gammaT_m), elle est mesurée au centre de gravité G (aussi noté gammaT).

- $\gamma_L$ (m/s²) : Accélération longitudinale, elle est mesurée au centre de gravité G (aussi noté gammaL).

- δ (rad) : Angle de dérive angle que fait le vecteur vitesse du véhicule avec son axe longitudinal.

- δ*ij* (rad) : Angle de dérive des roues ij.

- $F_{Y_{ij}}$ : force latérale ou transversale à la roue : projection de la réaction du sol sur la roue selon l'axe transversal de la roue

- $F_{Zij}$ : force verticale à la roue : projection de la réaction du sol sur la roue selon l'axe vertical de la roue

- $\mu = \dfrac{Fy}{F_z}$ : potentiel latéral *i,j:* indice des roues, le premier indice signifie avant/arrière, le second gauche/ droite.

Par exemple 1,1 signifie roue avant gauche, 2,1 signifie roue arrière gauche, 2,2 signifie roue arrière droite et 1,2 signifie roue avant droite.
Le procédé de contrôle est une structure qui peut se décomposer en cinq parties :

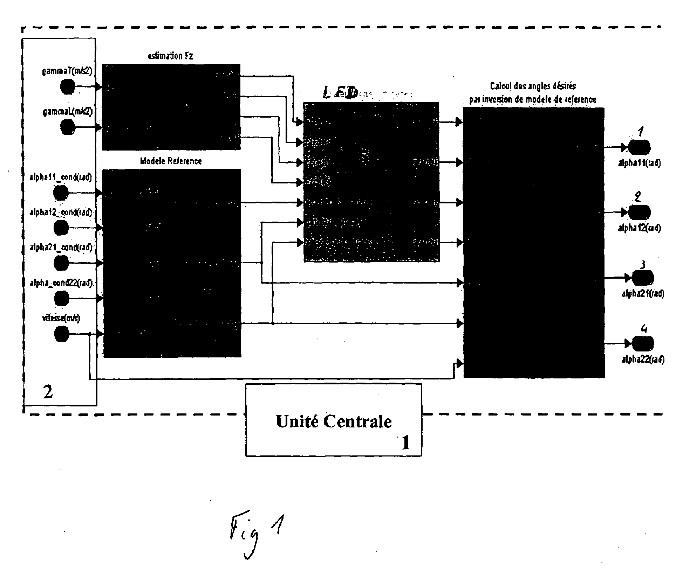

- Signaux d'entrées (bloc n°2 - figure 1).

- Estimation des efforts verticaux Fz (bloc n°3 - figure 1).

- Modèle de référence (bloc n°4 - figure 1).

- Distribution des efforts latéraux $F_{Y_{ij}}$ calculés LFD (bloc n°5 - figure 1).

- Calcul des angles $\alpha_{ij}$ désirés par inversion du modèle dé référence (bloc n°6 - figure 1)

**DESCRIPTION DE CHAQUE COMPOSANT**

**1-Les signaux d'entrées**(BLOC n°2 - figure 1)

Afin de mettre en oeuvre le procédé de l'invention, l'on a besoin des mesures ou des signaux suivants :

- Vitesse du véhicule : Ce signal est, par exemple, obtenu en faisant la moyenne de la vitesse ABS des roues d'un essieu/train.
- Angle de braquage $\alpha_{ij}$ des quatre roues : Ce signal peut, par exemple, être obtenu par un capteur.
- Accélération longitudinale $\gamma_L$ du véhicule : Ce signal peut, par exemple, être obtenu par un capteur ou par estimation.
- Accélération transversale $\gamma_t$ du véhicule : Ce signal peut, par exemple, être obtenu par un capteur ou par estimation.

*Exemple d'estimation des accélérations latérale* et *longitudinale :*

L'accélération longitudinale est estimée par un observateur (système doté de capteurs) à partir de la vitesse du véhicule et de la demande de freinage du conducteur selon le principe suivant :
La demande conducteur donne une première estimation $\gamma_L$ de l'accélération. On introduit d qui modélise l'erreur de modélise l'erreur de modélisation (masse etc.) :

$$\dot{v} = \gamma_{L} + d + k_{1}\left(v - \hat{v}\right)$$

$$\dot{d} = k_{2}\left(v - \hat{v}\right)$$

$$\text{Et} \quad \hat{\gamma}_{L} = \gamma_{L} + d.$$

Avec $(v)$ qui représente la vitesse mesurée du véhicule, $(\hat{v})$ qui représente la vitesse estimée du véhicule et $k_1$ $k_2$ qui représentent respectivement les gains de convergences de l'observateur pour les trains avant et arrière respectifs.

La première estimation est obtenue en divisant la consigne de freinage du conducteur notée « *Brake Force Request »* ce *qui signifie « Force* de *freinage demandée »* par la masse maximale du véhicule notée *Mass Max.* En effet il est préférable de sous estimer le signal, pour sous-estimer le report de charge.

$$\gamma_{L} = -\frac{Brake\_Force\_Request}{Mass\_Max}$$

Le compromis rapidité de la dérivation/sensibilité au bruit se règle en agissant sur les paramètres $k_1$ et $k_2$.

Alternativement ou en complément du mode de calcul de l'accélération latérale du véhicule présenté ci-dessus, cet accélération peut, également, être obtenu par un capteur ou par estimation à l'aide d'un modèle.

L'accélération transversale est par exemple estimée par un modèle deux roues du véhicule (cf. Equation 1 ci-après).

Pour cela le modèle utilise l'angle de braquage moyen_$\alpha$ mesuré des roues du train considéré et la vitesse V du véhicule selon les équations suivantes :

$$\frac{\partial}{\partial t}\begin{bmatrix}\dot{\psi}\\\delta\end{bmatrix} = \begin{pmatrix} -\dfrac{D_1 L_1^2 + D_2 L_2^2}{VI_z} & \dfrac{D_2 L_2 - D_1 L_1}{I_z} \\ -1 + \dfrac{D_2 L_2 - D_1 L_1}{MV^2} & -\dfrac{D_1 + D_2}{MV} \end{pmatrix}\begin{bmatrix}\dot{\psi}\\\delta\end{bmatrix} + \begin{pmatrix}\dfrac{D_1 L_1}{I_z}\\\dfrac{D_1}{MV}\end{pmatrix}\alpha$$

$$\gamma_t = \begin{pmatrix}\dfrac{D_2 L_2 - D_1 L_1}{MV} & -\dfrac{D_1 + D_2}{M}\end{pmatrix}\begin{bmatrix}\dot{\psi}\\\beta\end{bmatrix} + \dfrac{D_1}{M}\alpha$$

*Equation 1 : Modèle deux roues*

Dans un mode de réalisation particulier de l'invention il est possible d'inclure une fonction de vérification de la cohérence des capteurs.

En effet, si les mesures de l'angle de braquage moyen des roues avants, de la vitesse véhicule V et des accélérations longitudinale et transversale sont disponibles, il est alors possible de vérifier la cohérence des capteurs en comparant les signaux des accéléromètres avec les accélérations estimées par le modèle deux roues et par l'observateur.

En cas de détection d'une incohérence, un mode dégradé de la répartition est mis en oeuvre. Le mode dégradé peut consister par exemple à totalement stopper la stratégie de répartition d'effort ou à émettre un signal d'incohérence vers une unité centrale.

**2- Estimation des efforts verticaux Fz** (bloc n°3 - figure 1)

Les Accélération longitudinale $\gamma_L$ et transversale obtenues au bloc 2 détaillé précédemment sont transmises au bloc 3 qui a pour fonction de calculer les efforts verticaux $F_{Zij}$ de chaque roue.

Ces efforts verticaux sont estimés en tenant compte des reports de charge dynamiques longitudinaux et latéraux et de la charge statique par les équations suivantes :

$$F_{Z11} = -\frac{K_1}{e_1}hM\gamma_t - \frac{hM\gamma_L}{2L} + \frac{L_2 Mg}{2L}$$

$$F_{Z12} = +\frac{K_1}{e_1}hM\gamma_t - \frac{hM\gamma_L}{2L} + \frac{L_2 Mg}{2L}$$

$$F_{Z21} = -\frac{K_2}{e_2}hM\gamma_t + \frac{hM\gamma_L}{2L} + \frac{L_1 Mg}{2L}$$

$$F_{Z22} = +\frac{K_2}{e_2}hM\gamma_t + \frac{hM\gamma_L}{2L} + \frac{L_1 Mg}{2L}$$

*Equation 2 : Méthode d'estimation des efforts verticaux*

où $K_1$ et $K_2$ sont des coefficients liés aux suspensions du véhicule.

**3- Modèle de référence** (bloc n°4 - figure 1)

Parallèlement au bloc n°3, le bloc n°4 a pour fonction de calculer l'accélération de lacet $\ddot{\psi}$ du véhicule, ainsi que l'accélération transversale gammaT ou $\gamma$, et la vitesse de lacet $\dot{\psi}$ du véhicule en utilisant des données obtenues au bloc n° 2, c'est-à-dire la vitesse du véhicule et les angles de braquage mesurés des roues directionnelles.

Ces calculs sont réalisés en utilisant un modèle de référence qui peut par exemple être défini par les équations suivantes :

$$EQUATION - A$$

$$M\dot{\gamma}_t = F_{Y11} + F_{Y12} + F_{Y21} + F_{Y22}$$

$$EQUATION - B$$

$$I_z\ddot{\psi} = L_1(F_{Y11} + F_{Y12}) - L_2(F_{Y21} + F_{Y22})$$

$$EQUATION - C$$

$$V(\alpha_{11} + \delta_{11}) = (V\delta + \dot{\psi}L_1)/2$$

$$EQUATION - D$$

$$V(\alpha_{12} + \delta_{12}) = (V\delta + \dot{\psi}L_1)/2$$

$$EQUATION - E$$

$$V(\alpha_{21} + \delta_{21}) = (V\delta - \dot{\psi}L_2)/2$$

$$EQUATION - F$$

$$V(\alpha_{22} + \delta_{22}) = (V\delta - \dot{\psi}L_2)/2$$

$$EQUATION - G$$

$$\gamma_t = V(\dot{\psi} + \dot{\delta})$$

$$EQUATIONS - H$$

$$F_{Y11} = \frac{-D_{11}\delta_{11}}{1 + \dfrac{Bal}{V}s}, F_{Y12} = \frac{-D_{12}\delta_{12}}{1 + \dfrac{Bal}{V}s}, F_{Y21} = \frac{-D_{21}\delta_{21}}{1 + \dfrac{Bal}{V}s}, F_{Y22} = \frac{-D_{22}\delta_{22}}{1 + \dfrac{Bal}{V}s}$$

***Equation 3 : Exemple de modèle de référence***

Dans ce modèle « s » désigne la transformée de Laplace qui permet de prendre en compte les phénomènes transitoires dans le temps.

**4- LFD** (bloc n°5 - figure 1)

Le bloc n°5 utilise les données calculées par les blocs n°3 et 4, c'est-à-dire les efforts verticaux Fz à chaque roue, l'accélération de lacet, l'accélération transversale gammaT et la vitesse de lacet pour déterminer les efforts devant être appliqués sur chaque roue directionnelles.

La répartition des efforts latéraux doit satisfaire les objectifs suivants :

■ Pour chaque roue *ij* d'un train donné, le potentiel latéral, défini par le rapport de l'effort latéral sur l'effort vertical, est égal à $\mu$ *(avant ou arrière)*
■ L'accélération latérale demandée par le conducteur doit être respectée.

Par conséquent, la répartition doit donc satisfaire les équations suivantes :

$$F_{y11} = \mu_{avant} F_{z11}$$

$$F_{y12} = \mu_{avant} F_{z12}$$

$$F_{y21} = \mu_{arrière} F_{z21}$$

$$F_{y22} = \mu_{arrière} F_{z22}$$

$$M\gamma_t = \sum F_{yij}$$

$$\gamma_{tarrière} = \gamma_t - L_2 \ddot{\psi}$$

$$\gamma_{tavant} = \gamma_t + L_1 \ddot{\psi}$$

*Equation 4 : Equations de la répartition*

La résolution de ces équations donne la répartition d'efforts latéraux :

$$F_{y11} = \frac{M_{avant}(\gamma t + L_1 \ddot{\psi})}{F_{z11} + F_{z12}} F_{z11}$$

$$F_{y12} = \frac{M_{avant}(\gamma t + L_1 \ddot{\psi})}{F_{z11} + F_{z12}} F_{z12}$$

$$F_{y21} = \frac{M_{arrière}(\gamma t - L_2 \ddot{\psi})}{F_{z21} + F_{z22}} F_{z21}$$

$$F_{y22} = \frac{M_{arrière}(\gamma t - L_2 \ddot{\psi})}{F_{z21} + F_{z22}} F_{z22}$$

*Equation 5 : Répartition des efforts latéraux solution du problème*

Afin de gérer les variations d'adhérence, on note que des niveaux de saturation sur les efforts sont à ajouter. Ces derniers niveaux de saturation peuvent dépendre des différentes variables mesurées du véhicule comme par exemple l'accélération longitudinale et l'accélération transversale.

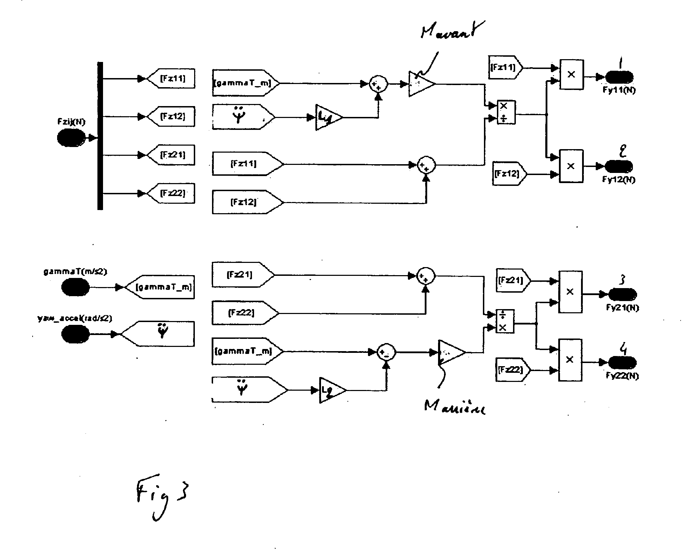

Un schéma de principe de ce bloc 5 est détaillé à la figure 3 dans laquelle :

- les entrées du bloc 5 sont les quatre efforts $F_{Zij}$ obtenus du bloc 3, l'accélération transversale gammaT_m, la vitesse de lacet vitesse_lacet_m obtenus du bloc 4 ;
- les sorties du bloc 5 sont les efforts transversaux du sol sur chaque roue.

Le bloc 5 est composé d'un sous bloc pour le calcul des efforts transversaux appliqués sur les roues du train avant et d'un sous bloc pour le calcul des efforts transversaux sur les roues du train arrière.

Le sous bloc du train avant comprend une opération de multiplication de l'accélération de lacet par la distance L1 ce qui donne un premier résultat qui est additionné avec l'accélération transversale (gammaT_m), ce qui donne un second résultat. Le second résultat ainsi obtenu est alors multiplié par la masse répartie sur le train avant, ce qui donne un troisième résultat. Parallèlement les efforts verticaux des roues avant de ce train sont additionnés, ce qui donne un quatrième résultat. Le troisième résultat est alors divisé par le quatrième résultat ce qui donne un cinquième résultat.

Ce cinquième résultat est alors multiplié par l'effort vertical appliqué sur une roue du train avant pour connaître l'effort transversal qui s'applique sur cette roue.

Le sous bloc de calcul des efforts transversaux appliqués sur le train arrière est identique au sous bloc de calcul des efforts appliqués sur le train arrière à la différence près que la distance L1 est remplacée par la distance L2, la masse du véhicule répartie sur le train avant est remplacée par la masse du véhicule répartie sur le train arrière et les efforts verticaux appliqués sur les roues sont ceux appliqués sur les roues du train arrière.

Les données ainsi obtenues au bloc 5 sont alors transmises au bloc 6.

**5- Calcul des angles désirés par inversion du modèle de référence** (bloc n˚6 - figure 1)

Ce bloc a pour objectif d'inverser le modèle de référence considéré (cf exemple partie 3 décrivant le bloc n˚4 et son modèle de référence) afin de retrouver les angles roue qu'il faut appliquer au véhicule.

Les efforts latéraux calculés dans la partie 4 décrivant le bloc n˚5 ainsi que la vitesse du véhicule obtenue au bloc n˚2 et l'accélération transversale gammaT et la vitesse de lacet font partie des entrées de ce modèle inverse du bloc n˚6.

L'inversion du modèle du bloc n˚4 pour obtenir les angles à appliquer aux roues directionnelles se fait comme suit :

- en partant de l'équation G et connaissant déjà les toutes les autres composantes de cette équation on obtient $\dot{\delta}$ ;
- puis on intègre $\dot{\delta}$ pour obtenir $\delta$ ;
- avec les équations H on obtient alors $\delta_{11}$, $\delta_{12}$, $\delta_{21}$, $\delta_{22}$ car on connaît déjà toutes les autres composantes de ces équations ;
- puis on remplace dans les équations respectives C, D, E, F, les $\delta_{11}$, $\delta_{12}$, $\delta_{21}$, $\delta_{22}$ et $\delta$ par leurs valeurs ce qui permet d'obtenir les valeurs d'orientation angulaire $\alpha_{i,j}$, à donner à chaque roue directionnelle.

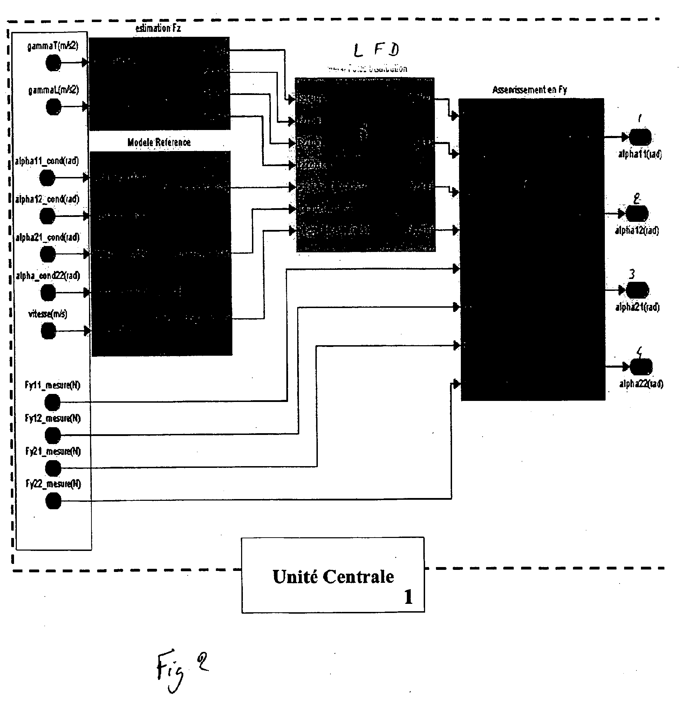

La figure 2 décrit une variante pour le calcul de l'angle d'orientation directionnelle à donner à chaque roue. Elle se différencie par le fait qu'elle utilise des entrées supplémentaires et une façon différente de calculer les quatre angles de roues.

Dans cette variante on mesure par des capteurs les quatre efforts latéraux $F_{yi,j}$ appliqués aux roues.

L'obtention des angles roues qu'il faut appliquer au véhicule se fait à l'aide de quatre asservissements en effort latéraux au lieu d'une inversion du modèle de référence décrite précédemment. Ces asservissements (bloc n˚6 de la figure 2) peuvent par exemple être réalisés par « PID » (proportionnelle intégrale dérivée) ou par un modèle interne.

**Revendications**

1.  Procédé de contrôle de l'orientation directionnelle d'un véhicule piloté comportant au moins deux roues directionnelles dont chacune est orientable indépendamment de l'autre selon un angle d'orientation propre, ces roues appartenant à un train du véhicule, ce procédé comprenant une étape de collecte d'une consigne d'accélération latérale, et une étape de calcul de consignes d'orientation de chaque roue directionnelle en fonction de ladite consigne d'accélération latérale, **caractérisé en ce que**, durant l'opération de calcul des consignes d'orientation des roues directionnelles, on calcule des consignes d'orientation de chacune des roues dudit train de sorte que la différence entre les niveaux d'adhérence $\mu$ de ces roues par rapport au sol soit inférieure à une valeurlimite.

2.  Procédé selon la revendication 1, **caractérisé en ce qu'**il est mis en oeuvre sur un véhicule comportant quatre roues directionnelles dont chacune est orientable indépendamment de l'autre selon un angle d'orientation propre, deux de ces roues appartenant à un train avant du véhicule et deux autres de ces roues appartenant à un train arrière du véhicule, le procédé étant en outre **caractérisé en ce que** durant l'opération de calcul des consignes d'orientation des roues directionnelles :

    - on calcule des consignes d'orientation de chacune des roues du train avant de sorte que la différence entre les niveaux d'adhérence de ces roues par rapport au sol soit inférieure à ladite première valeur limite et ;
    - on calcule des consignes d'orientation de chacune des roues du train arrière de sorte que la différence entre les niveaux d'adhérence de ces roues par rapport au sol soit inférieure à une seconde valeur limite.

3.  Procédé de contrôle selon l'une quelconque des revendications 1 ou 2, **caractérisé en ce que** le niveau d'adhérence $\mu$ d'une roue est calculé en appliquant la formule $\mu = \dfrac{Fy}{F_z}$ avec $Fy$ représentant la force transversale appliquée sur cette roue par le sol et avec $F_z$ représentant la force verticale appliquée sur cette roue par le sol.

4.  Procédé de contrôle selon la revendication 3, **caractérisé en ce que** la force verticale appliquée sur la roue est estimée au moins à partir de l'accélération longitudinale et transversale du véhicule, en prenant en compte la charge statique du véhicule et des reports de charge dynamiques longitudinaux et transversaux.

**5.** Procédé de contrôle selon la revendication 4, **caractérisé en ce que** l'une au moins des accélérations longitudinale et transversale du véhicule est constituée ou dérivée d'un signal de mesure délivré par au moins un capteur.

**6.** Procédé de contrôle selon l'une quelconque des revendications 4 ou 5, **caractérisé en ce que** l'accélération longitudinale du véhicule est obtenue à partir d'au moins une mesure de vitesse instantanée du véhicule.

**7.** Procédé de contrôle selon l'une quelconque des revendications 4 à 6, **caractérisé en ce que** l'accélération transversale du véhicule est estimée à partir d'une mesure de la vitesse instantanée du véhicule et d'une mesure d'un angle de rotation du volant de ce véhicule.

**8.** Procédé de contrôle selon l'une quelconque des revendications précédentes combinée à la revendication 2, **caractérisé en ce qu'**on calcule le niveau d'adhérence $\mu_1$ d'une première roue du train avant du véhicule en utilisant

la fonction $\mu_1 = F_{y11} / F_{z11} = \dfrac{M_{avant}(\gamma t + L_1\ddot{\psi})}{F_{z11} + F_{z12}}$

où $F_{z11}$ représente la force verticale appliquée sur cette première roue du train avant par le sol et $F_{z12}$ représente la force verticale appliquée sur la seconde roue de ce train avant par le sol, $M_{avant}$ représente la masse totale du véhicule répartie sur ce train avant, $\gamma t$ représente l'accélération latérale du véhicule mesurée ou évaluée au centre de gravité (G) de ce véhicule, $L_1$ représente la distance entre le train avant du véhicule et le centre de gravité (G) et $\ddot{\psi}$ représente l'accélération du mouvement de lacet du véhicule.

**9.** Procédé selon l'une quelconque des revendications précédentes combinée à la revendication 2, **caractérisé en ce qu'**on calcule le niveau d'adhérence $\mu_2$ d'une première roue du train arrière du véhicule en utilisant la fonction

$$\mu_2 = F_{y21} / F_{z21} = \frac{M_{arrière}(\gamma t - L_2\ddot{\psi})}{F_{z21} + F_{z22}}$$

où $F_{z21}$ représente la force verticale appliquée sur cette première roue du train arrière par le sol et $F_{z12}$ représente la force verticale appliquée sur la seconde roue de ce train arrière par le sol, $M_{arrière}$ représente la masse totale du véhicule répartie sur ce train arrière, $\gamma t$ représente l'accélération latérale du véhicule mesurée ou évaluée au centre de gravité (G) de ce véhicule, $L_2$ représente la distance entre le train arrière du véhicule et le centre de gravité (G) et $\ddot{\psi}$ représente l'accélération du mouvement de lacet du véhicule.

**10.** Procédé selon l'une quelconque des revendications 1 à 8, **caractérisé en ce qu'**on calcule chaque consigne d'orientation de roue directionnelle en inversant un modèle de calcul de référence le dit modèle comportant une opération consistant à calculer la force transversale appliquée sur la roue en fonction de l'orientation de cette roue et de paramètres de comportement dynamique du véhicule.

**Claims**

**1.** Method of controlling the steering orientation of a driven vehicle comprising at least two steerable wheels each of which is orientable independently of the other according to an inherent angle of orientation, these wheels belonging to an axle assembly of the vehicle, this method comprising a step of collecting a lateral acceleration setpoint, and a step of calculating orientation setpoints for each steerable wheel as a function of said lateral acceleration setpoint, **characterized in that**, during the operation of calculating the orientation setpoints of the steerable wheels, orientation setpoints are calculated for each of the wheels of said axle assembly so that the difference between the levels of grip $\mu$ of these wheels with respect to the ground is less than a limit value.

**2.** Method according to Claim 1, **characterized in that** it is implemented on a vehicle comprising four steerable wheels each of which is orientable independently of the other according to an inherent angle of orientation, two of these wheels belonging to a front axle assembly of the vehicle and two others of these wheels belonging to a rear axle assembly of the vehicle, the method being furthermore **characterized in that** during the operation of calculating the orientation setpoints of the steerable wheels:

- orientation setpoints are calculated for each of the wheels of the front axle assembly so that the difference between the levels of grip of these wheels with respect to the ground is less than said first limit value and;
- orientation setpoints are calculated for each of the wheels of the rear axle assembly so that the difference between the levels of grip of these wheels with respect to the ground is less than a second limit value.

3. Control method according to any one of Claims 1 or 2, **characterized in that** the level of grip $\mu$ of a wheel is calculated by applying the formula $\mu = Fy/F_z$ with $Fy$ representing the transverse force applied to this wheel by the ground and with $F_z$ representing the vertical force applied to this wheel by the ground.

4. Control method according to Claim 3, **characterized in that** the vertical force applied to the wheel is estimated at least on the basis of the longitudinal and transverse acceleration of the vehicle, by taking into account the static load of the vehicle and longitudinal and transverse dynamic load transfers.

5. Control method according to Claim 4, **characterized in that** one at least of the longitudinal and transverse accelerations of the vehicle is constituted by or derived from a measurement signal delivered by at least one sensor.

6. Control method according to any one of Claims 4 or 5, **characterized in that** the longitudinal acceleration of the vehicle is obtained on the basis of at least one measurement of instantaneous speed of the vehicle.

7. Control method according to any one of Claims 4 to 6, **characterized in that** the transverse acceleration of the vehicle is estimated on the basis of a measurement of the instantaneous speed of the vehicle and of a measurement of an angle of rotation of the steering wheel of this vehicle.

8. Control method according to any one of the preceding claims combined with Claim 2, **characterized in that** the level of grip $\mu_1$ of a first wheel of the front axle assembly of the vehicle is calculated using the function

$$\mu_1 = F_{y11}/F_{z11} = \frac{M_{front}(\gamma t + L_1 \ddot{\psi})}{F_{z11} + F_{z12}}$$

where $F_{z11}$ represents the vertical force applied to this first wheel of the front axle assembly by the ground and $F_{z12}$ represents the vertical force applied to the second wheel of this front axle assembly by the ground, $M_{front}$ represents the total vehicle mass distributed over this front axle assembly, yt represents the vehicle's lateral acceleration measured or evaluated at the centre of gravity (G) of this vehicle, $L_1$ represents the distance between the front axle assembly of the vehicle and the centre of gravity (G) and $\psi$ represents the acceleration of the yaw motion of the vehicle.

9. Method according to any one of the preceding claims combined with Claim 2, **characterized in that** the level of grip $\mu_2$ of a first wheel of the rear axle assembly of the vehicle is calculated using the function

$$\mu_2 = F_{y21}/F_{z21} = \frac{M_{rear}(\gamma t - L_2 \ddot{\psi})}{F_{z21} + F_{z22}}$$

where $F_{z21}$ represents the vertical force applied to this first wheel of the rear axle assembly by the ground and $F_{z12}$ represents the vertical force applied to the second wheel of this rear axle assembly by the ground, $M_{rear}$ represents the total vehicle mass distributed over this rear axle assembly, $\gamma t$ represents the vehicle's lateral acceleration measured or evaluated at the centre of gravity (G) of this vehicle, $L_2$ represents the distance between the rear axle assembly of the vehicle and the centre of gravity (G) and $\psi$ represents the acceleration of the yaw motion of the vehicle.

10. Method according to any one of Claims 1 to 8, **characterized in that** each steerable wheel orientation setpoint is calculated by inverting a reference calculation model, said model comprising an operation consisting in calculating the transverse force applied to the wheel as a function of the orientation of this wheel and of parameters of dynamic behaviour of the vehicle.

**Patentansprüche**

1. Verfahren zur Steuerung der Lenkausrichtung eines gefahrenen Fahrzeugs, das mindestens zwei lenkbare Räder aufweist, die jeweils unabhängig voneinander gemäß einem eigenen Ausrichtungswinkel ausrichtbar sind, wobei diese Räder zu einer Achsanordnung des Fahrzeugs gehören, wobei dieses Verfahren einen Schritt des Erhaltens einer Soll-Querbeschleunigung und einen Schritt des Berechnens von Ausrichtungssollwerten für jedes lenkbare Rad als Funktion der Soll-Querbeschleunigung umfasst, **dadurch gekennzeichnet, dass** während des Vorgangs des Berechnens der Ausrichtungssollwerte für die lenkbaren Räder Ausrichtungssollwerte für jedes der Räder der Achsanordnung so berechnet werden, dass die Differenz zwischen den Haftungsgraden μ dieser Räder bezüglich des Bodens kleiner als ein Grenzwert ist.

2. Verfahren nach Anspruch 1, **dadurch gekennzeichnet, dass** es an einem Fahrzeug durchgeführt wird, das vier lenkbare Räder aufweist, von denen jedes unabhängig von dem anderen gemäß einem eigenen Ausrichtungswinkel ausrichtbar ist, wobei zwei dieser Räder zu einer vorderen Achsanordnung des Fahrzeugs gehören und zwei andere dieser Räder zu einer hinteren Achsanordnung des Fahrzeugs gehören, wobei das Verfahren des Weiteren **dadurch gekennzeichnet ist, dass** während des Vorgangs des Berechnens der Ausrichtungssollwerte der lenkbaren Räder:

   - Ausrichtungssollwerte für jedes der Räder der vorderen Achsanordnung so berechnet werden, dass die Differenz zwischen den Haftungsgraden dieser Räder bezüglich des Bodens kleiner als der erste Grenzwert ist;
   - Ausrichtungssollwerte für jedes der Räder der hinteren Achsanordnung so berechnet werden, dass die Differenz zwischen den Haftungsgraden dieser Räder bezüglich des Bodens kleiner als ein zweiter Grenzwert ist.

3. Steuerverfahren nach Anspruch 1 oder 2, **dadurch gekennzeichnet, dass** der Haftungsgrad μ eines Rads berechnet wird, indem die Formel $\mu = F_y/F_z$ angewandt wird, wobei $F_y$ die durch den Boden an dieses Rad angelegte Querkraft darstellt und $F_z$ die durch den Boden an dieses Rad angelegte Vertikalkraft darstellt.

4. Steuerverfahren nach Anspruch 3, **dadurch gekennzeichnet, dass** die an das Rad angelegte Vertikalkraft mindestens anhand der Längsbeschleunigung und der Querbeschleunigung des Fahrzeugs geschätzt wird, indem die statische Belastung des Fahrzeugs und Verlagerungen der dynamischen Längs- und Querbelastung berücksichtigt werden.

5. Steuerverfahren nach Anspruch 4, **dadurch gekennzeichnet, dass** die Längsbeschleunigung und/oder die Querbeschleunigung des Fahrzeugs aus einem Messsignal besteht oder davon abgeleitet wird, das von mindestens einem Sensor geliefert wird.

6. Steuerverfahren nach Anspruch 4 oder 5, **dadurch gekennzeichnet, dass** die Längsbeschleunigung des Fahrzeugs anhand mindestens einer Messung der Momentangeschwindigkeit des Fahrzeugs erhalten wird.

7. Steuerverfahren nach einem der Ansprüche 4 bis 6, **dadurch gekennzeichnet, dass** die Querbeschleunigung des Fahrzeugs anhand einer Messung der Momentangeschwindigkeit des Fahrzeugs und einer Messung eines Drehwinkels des Lenkrads dieses Fahrzeugs geschätzt wird.

8. Steuerverfahren nach einem der vorhergehenden Ansprüche in Kombination mit Anspruch 2, **dadurch gekennzeichnet, dass** der Haftungsgrad $\mu_1$ eines ersten Rads der vorderen Achsanordnung des Fahrzeugs unter Verwendung der Funktion

$$\mu_1 = F_{y11}/F_{z11} = \frac{M_{vordere}(\eta + L_1\ddot{\psi})}{F_{z11} + F_{z12}}$$

berechnet wird, wobei $F_{z11}$ die durch den Boden an dieses erste Rad der vorderen Achsanordnung angelegte Vertikalkraft und $F_{z12}$ die durch den Boden an das zweite Rad dieser vorderen Achsanordnung angelegte Vertikalkraft, $M_{vordere}$ die Gesamtmasse des Fahrzeugs, die auf diese vordere Achsanordnung verteilt ist, η die Querbeschleunigung dieses Fahrzeugs, die am Schwerpunkt (G) dieses Fahrzeugs gemessen oder geschätzt wird, $L_1$ den Abstand zwischen der vorderen Achsanordnung des Fahrzeugs und dem Schwerpunkt (G) und $\ddot{\psi}$ die Beschleunigung der Gierbewegung des Fahrzeugs darstellt.

9. Verfahren nach einem der vorhergehenden Ansprüche in Kombination mit Anspruch 2, **dadurch gekennzeichnet, dass** der Haftungsgrad μ2 eines ersten Rads der hinteren Achsanordnung des Fahrzeugs unter Verwendung der Funktion

$$\mu_2 = F_{y21}/F_{z21} = \frac{M_{hintere}(\eta - L_2\ddot{\psi})}{F_{z21} + F_{z22}}$$

berechnet wird, wobei $F_{z21}$ die durch den Boden an dieses erste Rad der hinteren Achsanordnung angelegte Vertikalkraft und $F_{z22}$ die durch den Boden an das zweite Rad dieser hinteren Achsanordnung angelegte Vertikalkraft,

$M_{hintere}$ die Gesamtmasse des Fahrzeugs, die auf diese hintere Achsanordnung verteilt ist, $\eta$ die Querbeschleunigung dieses Fahrzeugs, die am Schwerpunkt (G) dieses Fahrzeugs gemessen oder geschätzt wird, $L_2$ den Abstand zwischen der hinteren Achsanordnung des Fahrzeugs und dem Schwerpunkt (G) und $\ddot{\psi}$ die Beschleunigung der Gierbewegung des Fahrzeugs darstellt.

10. Verfahren nach einem der Ansprüche 1 bis 8, **dadurch gekennzeichnet, dass** jeder Ausrichtungssollwert eines lenkbaren Rads **dadurch** berechnet wird, dass ein Bezugsberechnungsmodell invertiert wird, wobei das Modell einen Vorgang umfasst, der darin besteht, die an das Rad angelegte Querkraft als Funktion der Ausrichtung dieses Rads und von dynamischen Verhaltensparametern des Fahrzeugs zu berechnen.

estimation Fz

gammaT(m/s2)

gammaL(m/s2)

LFD

Calcul des angles désirés
par invesion de modele de reference

Modele Reference

alpha11_cond(rad)

alpha12_cond(rad)

alpha21_cond(rad)

alpha_cond22(rad)

vitesse(m/s)

2

*1*
alpha11(rad)

*2*
alpha12(rad)

*3*
alpha21(rad)

*4*
alpha22(rad)

**Unité Centrale**

**1**

Fig 1

Fig 2

Fig 3

**EP 1 907 260 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1147960 A

- EP 1407949 A